# EUROPÄISCHE PATENTSCHRIFT

(11) **EP 3 236 204 B1**
(45) Veröffentlichungstag und Bekanntmachung des Hinweises auf die Patenterteilung: **14.07.2021**
(21) Anmeldenummer: 17166159.8
(22) Anmeldetag: 12.04.2017
(51) Int. Cl.: G01C 15/00, G01C 25/00, G01B 11/27

(54) **NIVELLIERBARER ROTATIONSLASER UND DESSEN VERWENDUNG FÜR DIE VERMESSUNG VON WERKZEUGMASCHINEN**
LEVELABLE ROTATION LASER AND ITS USE FOR MEASURING MACHINE TOOLS
LASER ROTATIF NIVELABLE ET SON UTILISATION DANS LA MESURE DE MACHINES-OUTILS

(30) Priorität: 18.04.2016 DE 102016107100
(43) Veröffentlichungstag der Anmeldung: 25.10.2017
(73) Patentinhaber: Status Pro Maschinenmesstechnik GmbH, 44866 Bochum (DE)
(72) Erfinder: FOLEY, David, 44799 Bochum (DE); KNODE, Burkhard, 45134 Essen (DE)
(74) Vertreter: Grundmann, Dirk

(56) Entgegenhaltungen:
- EP-A1- 2 781 880
- EP-A1- 2 963 382
- EP-A1- 3 173 741
- STABILA: "Laser LAR-250", STABILA LAR-250, PAGE(S) 1 - 14 , XP002757136, Gefunden im Internet: URL:http://www.stabila.de/cms/upload/downl oad/pdf/manual/en/lar250_manual_en.pdf [gefunden am 2008-04-01]
- "TRIAX - UL300 Bedienungsanleitung", , 1. Oktober 2004 (2004-10-01), XP055269227, Gefunden im Internet: URL:http://www.glm-laser.com/glm/files/ul3 00_bedienungsanleitung.pdf [gefunden am 2016-04-28]

## Beschreibung

### Gebiet der Technik

Die Erfindung betrifft einen Rotationslaser gemäß Gattungsbegriff des Anspruchs 1 und ein Verfahren zur Bestimmung der Parallelität zweier Maschinenteile.

### Stand der Technik

Aus der EP 2 963 382 A1 ist ein Verfahren zur Ermittlung der Ausrichtung eines Laserstrahls in Bezug auf eine Drehachse einer Einrichtung, die um die Drehachse rotierbar ist, vorgesehen. Mit einer derartigen Vorrichtung lässt sich die Parallelität zweier sich in einer Horizontalebene erstreckenden Maschinenteile ermitteln.

Die EP 3173 741 A1 fällt unter den Stand der Technik gemäß Art. 54 (3) EPÜ und beschreibt ein Verfahren zum Überprüfen und/oder Kalibrieren einer Horizontalachse eines Rotationslasers. Das Gehäuse ist drehbar auf einem Stativ angeordnet. Durch Drehen des Gehäuses um 180° kann unter Verwendung zweier Messelemente die Horizontallage des rotierenden Laserstrahls eingestellt werden. Eine ähnliche Anordnung offenbart die EP 2 781 880 A1.

Ein Rotationslaser gemäß Stand der Technik besitzt ein Gehäuse mit einer Bodenplatte, mit der das Gehäuse auf einer horizontalen Aufstellfläche aufstellbar ist. Innerhalb des Gehäuses befindet sich eine Laserstrahleinrichtung, die einen Halbleiter-Laser beinhaltet und die mehrere Libellen aufweist, mit denen elektronisch die Neigungslage der Laserstrahleinrichtung gegenüber einer Horizontalebene ermittelbar ist. Die Laserstrahleinrichtung ist zur Justierung kardanisch innerhalb des Gehäuses aufgehängt und kann um einen Schwenkpunkt mittels Stellmotoren in eine Position verschwenkt werden, in der eine Rotationsachse eines im Kopf angeordneten Pentaprismas in einer Vertikalen liegt. Der vom Pentaprisma um 90° umgelenkte Laserstrahl überstreicht bei der Rotation des Pentaprismas einen 360°-Winkel, der in einer Horizontalebene liegt.

Vor einer Messung mit dem Rotationslaser müssen die Nivellierungsmittel, also die Libellen, kalibriert werden. Beim Stand der Technik wird hierzu das Gehäuse auf eine ebene Aufstellfläche gestellt und mit einer Messeinrichtung in einem radialen Abstand zum Rotationslaser die Höhe der Rotationsebene des Laserstrahls gegenüber einem willkürlichen Referenzpunkt gemessen. Das Gehäuse wird dann auf der Aufstellfläche um 180° gedreht und wiederum die Höhe der Rotationsebene an der Messstelle gemessen. Anschließend erhält die Steuereinrichtung eine Steuereingabe, um die Neigungslage der Lasereinrichtung gegenüber dem Gehäuse derart zu verstellen, dass die Rotationsebene genau zwischen den beiden gemessenen Höhenwerten liegt. Anschließend wird das Gehäuse um 90° gedreht und dieselbe Messung bzw. Neigungsverstellung um die andere Horizontalrichtung vorgenommen. Die Rotationsebene des rotierenden Laserstrahls liegt dann in einer aufgrund der mechanischen Bewegung des Gehäuses gegenüber der Aufstellfläche fehlerbehaftet in der Horizontalebene. Gleichwohl werden die Libellen in dieser Position "genullt".

Um die Parallelität zweier Maschinenteile, beispielsweise zweier Walzen, bestimmen zu können, kann ein Rotationslaser verwendet werden. Dieser wird hierzu nicht stehend verwendet, bei dem der Befestigungsabschnitt auf einer horizontalen Aufstellfläche steht, sondern liegend, wobei die Rotationsachse in der Horizontalen verläuft. Zur Nivellierung der Rotationsachse ist eine dritte Libelle vorgesehen, mit deren Hilfe und mit Hilfe eines der Stellmotoren die Rotationsachse bzw. die Achse eines in Rotationsrichtung gerichteten axialen, stehenden Laserstrahls horizontal ausgerichtet wird. In der Horizontalebene wird der axiale Laserstrahl annähernd parallel zum Verlauf des Maschinenteils, also zur Oberfläche beispielsweise einer Walze ausgerichtet. Die Rotationsebene des rotierenden Laserstrahls ist dann eine Vertikalebene und definiert eine Referenzlinie zwischen zwei willkürlich in die Rotationsebene gelegten Markierungselementen, bei denen es sich um Messempfänger handeln kann. Anhand des derart ausgerichteten Laserstrahls wird dann an zumindest zwei voneinander beabstandeten Messstellen am Maschinenteil der Abstand des Maschinenteils zum axialen Laserstrahl bestimmt.

Danach wird der Rotationslaser in eine zweite Position in die Nähe eines zweiten Maschinenteiles gebracht und derart ausgerichtet, dass der axiale Laserstrahl in der Horizontalebene liegt und die Rotationsebene des rotierenden Laserstrahls in der durch die Markierungselemente definierten Referenzlinie. Sodann wird wie am ersten Maschinenteil auch am zweiten Maschinenteil an zumindest zwei Messstellen entlang des Maschinenteiles dessen Abstand zum axialen Laserstrahl bestimmt.

Die bei der Nivellierung verwendeten Libellen sind nicht nur empfindlich hinsichtlich einer Drehung um ihre Hauptdrehachse. Sie sind auch empfindlich auf eine Drehung um ihre quer dazu liegende Achse. Es ist deshalb erforderlich, dass die Lasereinrichtung bei beiden Messungen denselben Neigungswinkel um die Richtung des axialen Laserstrahles besitzt. Um diesen Verrollwinkel gleich zu halten, ist beim Stand der Technik eine Wasserwaage am Gehäuse vorgesehen, mit der sich der Verrollwinkel grob einstellen lässt.

Zum Stand der Technik gehören insbesondere die in der DE 43 41 578 A1 oder der DE 10 2008 035 480 A1 beschriebenen Rotationslaser.

### Zusammenfassung der Erfindung

Der Erfindung liegt die Aufgabe zugrunde, einen Rotationslaser derart weiterzubilden, dass er für die im Maschinenbau verlangten Messungenauigkeiten von weniger als 10 µrad verwendbar ist und ein Verfahren zum Nivellieren des Rotationslasers und zur Bestimmung der Parallelität zweier Maschinenteile anzugeben.

Gelöst wird die Aufgabe durch die in den Ansprüchen 1 und 5 angegebene Erfindung.

Zunächst und im Wesentlichen ist vorgesehen, dass das Gehäuse von einer Steuereinrichtung relativ gegenüber dem Befestigungsabschnitt von einem Drehantrieb, beispielsweise von einem Schrittmotor, um eine Drehachse in vorbestimmte Winkelstellungen verdrehbar ist. Die Drehachse erstreckt sich dabei annähernd richtungsgleich zur Rotationsachse und steht bevorzugt senkrecht auf einer Aufstellebene einer Bodenplatte. Zufolge dieser Ausgestaltung lassen sich die ersten Nivellierungsmittel, die bevorzugt von elektronischen Libellen ausgebildet sind, derart genau kalibrieren, dass der Rotationslaser die für den Einsatz im Maschinenbau erforderliche Winkelmaßgenauigkeit besitzt. Mittels des Drehantriebes ist es darüber hinaus möglich, die Parallelitätsmessung erheblich genauer vorzunehmen, da mittels des Drehantriebes der Verrollwinkel automatisiert über die Steuereinrichtung genauer einstellbar bzw. kompensierbar ist. Hierzu ist ergänzend zu einem Nivellierungsmittel, mit dem die Horizontallage des axialen Laserstrahls einstellbar ist, ein weiteres Nivellierungsmittel vorgesehen, bei dem es sich um eine Libelle oder um einen elektromechanischen Neigungssensor handeln kann. Mit diesem Nivellierungsmittel wird in der ersten Position der Parallelitätsmessung am ersten Maschinenteil der Verrollwinkel des Gehäuses gegenüber dem axialen Laserstrahl bestimmt oder der Verrollwinkel des Gehäuses, der Lasereinrichtung oder des Nivellierungsmittels auf null korrigiert. Mittels des Drehantriebes und dieses Neigungssensors wird derselbe Verrollwinkel bei der zweiten Messung am zweiten Maschinenteil bzw. bei jeder weiteren Messung an jedem weiteren Maschinenteil eingestellt. Der auf variierende Verrollwinkel zurückzuführende Messfehler wird auf diese Weise automatisch kompensiert.

Der erfindungsgemäße Rotationslaser besitzt eine programmgesteuerte Steuereinrichtung, die die ersten und zweiten Nivellierungsmittel vor jeder Messung automatisch mit Hilfe eines elektronischen Messempfängers kalibrieren kann, wobei der elektronische Messempfänger in einer Datenübertragungsverbindung zur Steuereinrichtung steht. Es kann sich dabei um eine Infrarotdatenübertragungsstrecke handeln. Der Kalibriervorgang muss lediglich initialisiert werden. Nach der Initialisierung führt die Steuereinrichtung automatisch die eingangs beschriebenen Kalibrierschritte durch, bei denen zunächst hinsichtlich einer ersten horizontalen Raumrichtung in 180° voneinander verschiedenen Drehstellungen des Gehäuses gegenüber dem Befestigungsabschnitt die Höhenlagen der Rotationsebene, also der Beleuchtungspunkte des Laserstrahls, auf einer Messfläche des Messempfängers ermittelt werden. Dies erfolgt bei stetig rotierendem Laserstrahl. Liegt die Rotationsebene nicht in der Horizontalebene, so besitzen die beiden Beleuchtungspunkte verschiedene vertikale Höhen. Es wird deren Mitte berechnet. Mittels der Stellmotoren der Lasereinrichtung wird die Lasereinrichtung derart um eine Horizontalachse geschwenkt, dass der rotierende Laserstrahl in beiden Drehstellungen denselben Punkt auf dem Messfeld des Messempfängers trifft. Sodann wird das Gehäuse von der Steuereinrichtung um 90° gedreht, um in analoger Weise ebenfalls durch Messen zweier Höhenwerte in 180° verschiedenen Drehstellungen des Gehäuses einen Mittelwert zu ermitteln und die Rotationsebene um die andere Horizontalachse solange zu variieren, bis der Laserstrahl in den beiden um 180° verschiedenen Drehstellungen denselben Punkt auf dem Messfeld trifft. Nachdem die Rotationsebene des Rotationslasers auf diese Weise in eine Horizontalebene gebracht worden ist, werden die aktuellen Messwerte der Libellen als Nullpunkt gespeichert. Der Rotationslaser besitzt darüber hinaus verschiedene Sensoren, mit denen Umgebungsparameter wie Temperatur an der Außenseite des Gehäuses und Temperatur inneinseitig des Gehäuses, gegebenenfalls auch Luftfeuchte außerhalb des Gehäuses und Luftfeuchte innerhalb des Gehäuses gemessen werden kann. Die von der Steuereinrichtung über diese Sensoren gemessenen Werte werden verwendet, um nach Beginn der Initialisierung mit der ersten Messung zu warten, bis sich ein ausreichendes Gleichgewicht der Umgebungsparameter eingestellt hat. Nach jedem Messschritt wird zunächst gewartet, bis sich ein Gleichgewicht der Umgebungsparameter eingestellt hat, bevor die Messung vorgenommen wird. Das Gehäuse wird zu Anfang in eine derartige Drehstellung gebracht, dass eine der Achsen der kardanischen Aufhängung der Lasereinrichtung in Richtung des verwendeten Messempfängers weist, so dass die andere Achse senkrecht dazu steht.

### Kurze Beschreibung der Zeichnungen

Im Folgenden wird die Erfindung anhand von Ausführungsbeispielen näher erläutert. Es zeigen:
- Fig. 1: schematisch einen Querschnitt durch das Gehäuse 1 eines Rotationslasers und einen beabstandet vom Gehäuse 1 angeordneten Messempfänger 20, wobei die Papierebene die X/Y-Ebene eines rechtwinkligen Koordinatensystems darstellt;
- Fig. 2: schematisch den Schnitt gemäß der Linie II - II in Fig. 1 in der X/Y-Ebene;
- Fig. 3: schematisch den Schnitt gemäß der Linie III - III in Fig. 1 in der X/Y-Ebene;
- Fig. 4: schematisch den Schnitt gemäß der Linie IV - IV in Fig. 1 in der x/y-Ebene;
- Fig. 5a: schematisch eine Funktionsstellung bei einer Parallelitätsmessung in Draufsicht auf eine Horizontalebene X/Y;
- Fig. 5b: die in Fig. 5a dargestellte Funktionsstellung, jedoch in einer Darstellung in der X/Y-Ebene;
- Fig. 5c: die in den Figuren 5a und 5b dargestellte Funktionsstellung, jedoch in der X/Y-Ebene;
- Fig. 6a: eine weitere Funktionsstellung bei der Parallelitätsmessung in einer Darstellung gemäß Fig. 5a;
- Fig. 6b: die Funktionsstellung gemäß Fig. 6a in einer Darstellung gemäß Fig. 5b;
- Fig. 6c: die Funktionsstellung gemäß der Figuren 6a, 6b, jedoch in einer Funktionsstellung gemäß Fig. 5c;
- Fig. 7a: eine erste Funktionsstellung zur Kalibrierung der ersten Neigungsmittel 4, 5;
- Fig. 7b: eine Darstellung gemäß Fig. 7a, jedoch mit um 180° um den Winkel ω gedrehten Gehäuse 1;
- Fig. 7c: eine Darstellung gemäß der Fig. 7a und 7b, jedoch mit gegenüber der Fig. 7a um 90° gedrehtem Gehäuse 1;
- Fig. 7d: eine Darstellung gemäß Fig. 7c, jedoch mit gegenüber der Funktionsstellung in Fig. 7c um 180° gedrehtem Gehäuse 1;
- Fig. 8: die Seitenansicht auf ein Ausführungsbeispiel der Erfindung,
- Fig. 9: einen perspektivischen Stufenschnitt entlang der in der Figur 8 mit IX-IX bezeichneten Schnittlinie,
- Fig. 10: den Schnitt gemäß der Linie X-X in Figur 8,
- Fig. 11: den Schnitt gemäß der Linie XI-XI in Figur 8,
- Fig. 12: den Schnitt gemäß der Linie IX-IX in Figur 8 entsprechend der Darstellung gemäß Figur 9,
- Fig. 13: den Schnitt gemäß der Linie XIII-XIII in Figur 11,
- Fig. 14: eine perspektivische Darstellung mit einer Schnittfläche gemäß der Schnittlinie X-X in Figur 8 und
- Fig. 15: eine perspektivische Darstellung aufgebrochen mit nicht dargestellter Bodenplatte 8.

### Beschreibung der Ausführungsformen

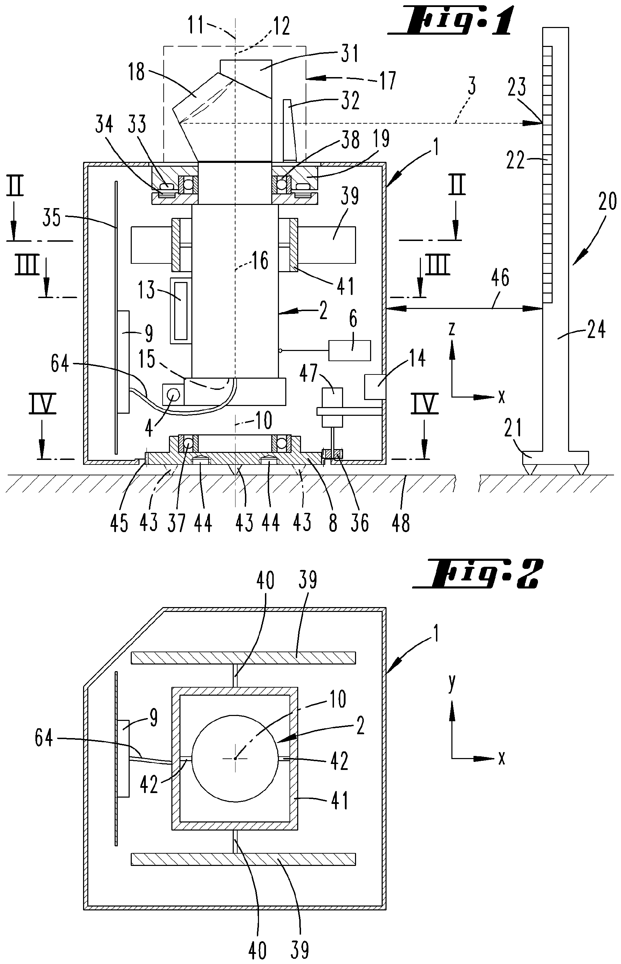

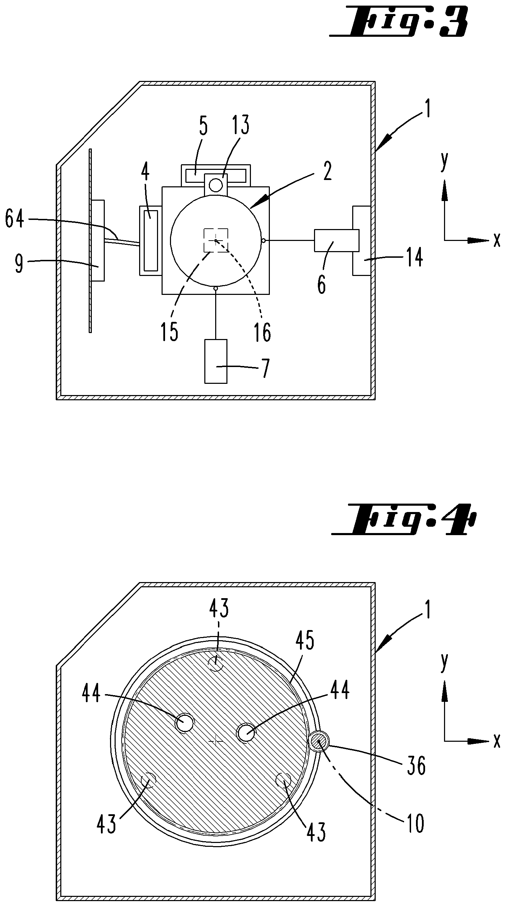

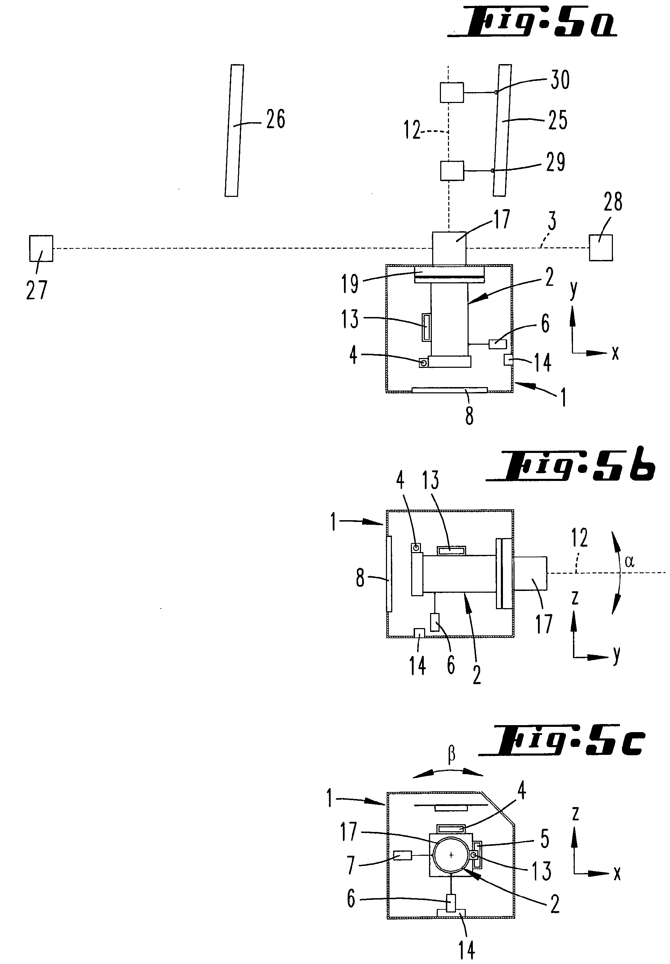

Der in den Figuren 1 bis 4 schematisch und in den Figuren 5a bis 7d grob schematisch dargestellte Rotationslaser besitzt ein Gehäuse 1, welches eine Unterseite und eine Oberseite sowie vier Vertikalseiten aufweist, wenn das Gehäuse 1 mittels Aufstellpunkten 43 auf eine Horizontalfläche 48 aufgestellt ist. Die Bodenfläche besitzt einen Fuß 8, der einen Befestigungsabschnitt ausbildet, mit dem die Bodenfläche auch an einer Vertikalfläche befestigbar ist. Hierzu können Befestigungsmittel, beispielsweise Innengewinde 44, vorgesehen sein, mit denen der Fuß 8 bzw. der Befestigungsabschnitt an einem Stativ befestigt werden kann.

Der Befestigungsabschnitt 8 bildet eine runde Drehscheibe aus, die über ein Drehlager 37 mit dem Gehäuse 1 verbunden ist. Bei dem Drehlager 37 kann es sich um ein Kugellager handeln, das eine Drehachse 10 aufweist, die in der stehenden Stellung des Rotationslasers im Wesentlichen eine Vertikalachse 1 ist. Der Befestigungsabschnitt 8 kann eine Umfangsverzahnung 45 aufweisen, in die die Zähne eines Zahnrades 36 eingreifen, das von einem Drehantrieb 47 drehangetrieben wird. Der Drehantrieb 47 ist bevorzugt ein Schrittmotor, so dass das Gehäuse 1 um die Drehachse 10 in frei wählbare Winkelstellung gedreht werden kann, wobei der Befestigungsabschnitt 8 fest mit dem Untergrund, beispielsweise der Horizontalfläche 48 oder einem Stativ, verbunden bleibt.

Innerhalb des Gehäuses 1 befindet sich eine kardanische Aufhängung für eine Laserstrahleinrichtung 2. Eine gehäusefeste Kardanaufhängung 39 lagert einen Kardanringkörper 41, der um eine Gelenkachse 40 verschwenkbar ist. In einem dreiachsigen Koordinatensystem, bei dem die Z-Achse eine Vertikalachse darstellt, die im Wesentlichen parallel zur Drehachse 10 verläuft, erstreckt sich die Gelenkachse 40 in der in einer Horizontalebene verlaufenden Y-Richtung. Der Kardanringkörper 41 kann mittels eines Stellmotors 6 um die Y-Achse verschwenkt werden, um die Neigungslage einer Mittelachse 11 der Laserstrahleinrichtung 2 zu verstellen.

Die Laserstrahleinrichtung 2 ist über sich in der horizontalen X-Richtung erstreckende Gelenkachsen 42 mit dem Kardanringkörper 41 verbunden. Ein weiterer Stellantrieb 7 ist in der Lage, die Laserstrahleinrichtung 2 um die X-Achse zu verschwenken.

Die kardanischen Aufhängungen 39 bis 42 bilden somit einen Gelenkpunkt aus, um den die Neigungslage der Laserstrahleinrichtung 2 bzw. deren Achse 11 derart auszurichten, dass sie senkrecht auf einer Horizontalebene steht.

Die Laserstrahleinrichtung 2 trägt ein Drehlager 38, über welches ein Kopf 17 drehbar, aber axial und neigungsfest mit der Laserstrahleinrichtung 2 verbunden ist. Die Achse der Laserstrahleinrichtung 2 entspricht dabei der Rotationsachse 11, um die der Kopf 17 gegenüber der Laserstrahleinrichtung 2 rotieren kann. Es ist ein Rotationsantrieb 19 vorgesehen, der beispielsweise Magnete 33 und Spulen 34 aufweisen kann, um den Kopf 17 derart um die Laserstrahleinrichtung 2 rotieren zu lassen, dass ein rechtwinklig zur Rotationsachse 11 aus dem Kopf 17 austretender Laserstrahl 3 in einer Rotationsebene senkrecht zur Rotationsachse 11 rotiert.

Zur Erzeugung des Laserstrahles 3 besitzt die Laserstrahleinrichtung 2 einen Laser 15, bei dem es sich um einen Halbleiterlaser handeln kann. Dieser ist ortsfest am Gehäuse 1 befestigt und erzeugt einen Laserstrahl 16, der über einen Lichtwellenleiter 64 zu einer Emissionsfläche 15 geleitet wird. Daraus tritt ein koaxial zur Rotationsachse ausgerichteter Laserstrahl 16, der durch das Drehlager 38 hindurch geht und in ein dem Kopf 17 zugeordnetes Pentaprisma 18 eintritt, in dem der Laserstrahl 16 bzw. ein Teil des Laserstrahles 16 durch eine Mehrfachreflektion um 90° umgelenkt wird. Zur Feinjustage der Rechtwinkligkeit des Laserstrahles 3 zum Laserstrahl 16 ist eine Keilplatte 32 vorgesehen.

Ein anderer Teil des Laserstrahles 16 tritt im Wesentlichen geradlinig durch das Pentaprisma 18 hindurch. Brechungseffekte werden durch ein Ausgleichsprisma 31 derart kompensiert, dass sich ein axialer Laserstrahl 12 parallel zur Rotationsachse 11 und bevorzugt in der Rotationsachse 11 ausbreitet. Der axiale Laserstrahl 12 wird derart ausgerichtet, dass er möglichst senkrecht zur Rotationsebene des rotierenden Laserstrahls 3 verläuft.

An der Laserstrahleinrichtung 2 befindet sich ein erstes Nivellierungsmittel 4, bei dem es sich um eine Libelle handelt, die ein elektrisches Signal abgibt, welches sich ändert, wenn die Neigungslage 4 der Libelle geändert wird. Mit der Libelle 4 lässt sich die Neigung der Laserstrahleinrichtung 2 um die X-Richtung ermitteln. Mit einem zweiten Nivellierungsmittel 5, welches ebenfalls von einer Libelle gebildet ist, lässt sich die Neigungslage der Laserstrahleinrichtung 2 gegenüber der Y-Achse ermitteln.

Es ist eine Steuereinrichtung 9 vorgesehen, bei der es sich um einen Mikrocontroller handeln kann, der auf einer Leiterplatte 35 sitzt. Mittels der ersten Nivellierungsmittel 4, 5 gewinnt die Steuereinrichtung 9 Informationen über die Neigungsstellung der Laserstrahleinrichtung 2 und insbesondere über die Winkelstellung der Rotationsachse 11 gegenüber einer Vertikalachse. Mittels der Stellmotoren 6, 7 ist die Steuereinrichtung 9 in der Lage, die Laserstrahleinrichtung 2 derart zu justieren, dass die Rotationsachse 11 bzw. die Richtung des axialen Laserstrahls 12 in Richtung einer Vertikalen verläuft.

Voraussetzung ist eine ordnungsgemäße Kalibrierung der Libellen 4, 5. Aufgrund mechanischer Einwirkungen und/oder Änderung der Umgebungsparameter wie Luftfeuchtigkeit, Temperatur etc. können die Libellen 4, 5 ihre Kalibrierung verlieren.

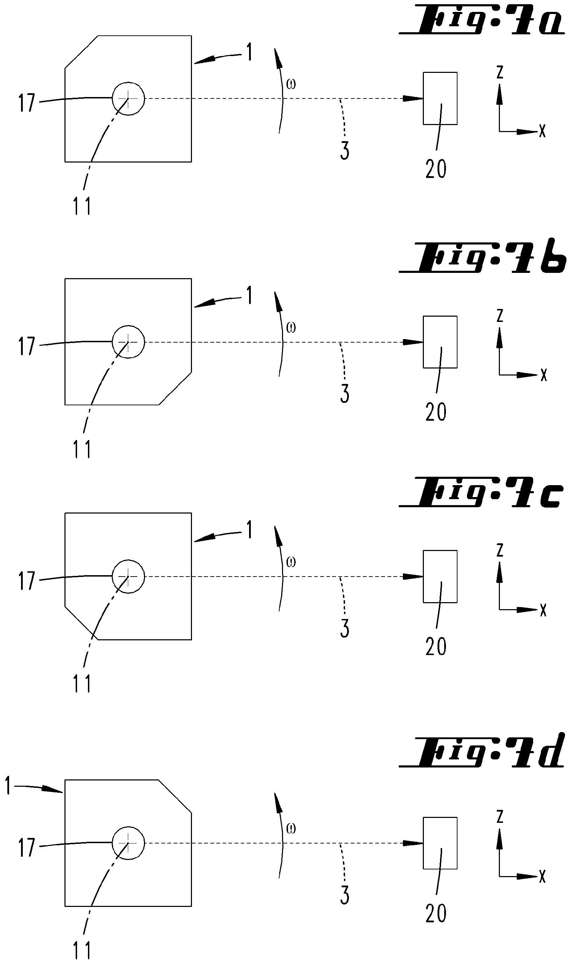

Die Kalibrierung der Libellen 4, 5 wird anhand der Figuren 7a bis 7d erläutert.

Hierzu wird das Gehäuse 1 auf eine Horizontalfläche 48 aufgesetzt. Sodann wird mit den fehlerhaft kalibrierten Libellen 4, 5 die Laserstrahleinrichtung 2 in eine fehlerhafte Vertikalstellung gebracht, in der die Rotationsebene des Laserstrahls 3 nicht in der Horizontalen liegt.

Mittels eines Messelementes 20, bei dem es sich um einen Messempfänger handelt, der in einem radialen Abstand zum Gehäuse 1 vertikal positioniert wird, beispielsweise mit einem Fuß 21 auf der Horizontalfläche 48 aufgestellt wird, wird die Vertikalposition 23 des rotierenden Laserstrahls 3 auf einem Messfeld 22 gemessen. Es handelt sich dabei um den Punkt, in dem der rotierende Laserstrahl 3 auf das Messfeld 22 auftrifft. Der diesbezügliche Wert kann über eine Datenübertragungsstrecke 46, bei der es sich um eine Infrarotverbindung handeln kann, an das Gehäuse 1 bzw. die Steuereinrichtung 9 übermittelt werden.

In einer ersten Messung, die schematisch in der Figur 7a dargestellt ist, wird bei rotierendem Laserstrahl 3 in Richtung des Pfeiles ω eine erste Vertikalposition 23 ermittelt. Sodann wird mittels des Drehantriebes 47 das Gehäuse gegenüber dem Befestigungsabschnitt 8 um 180° in die in Figur 7b dargestellte Stellung gedreht. Die Gehäusedrehung erfolgt ebenfalls in Richtung des Pfeiles ω. Der rotierende Laserstrahl 3 trifft jetzt in einer anderen vertikalen Höhe das Messfeld 22. Die Steuereinrichtung 9 ermittelt aus den beiden Vertikalpositionen 23 einen Mittelwert und steuert den Stellmotor 6, 7 solange, bis der Laserstrahl 3 im Mittelpunkt auf das Messfeld 22 trifft.

Sodann wird das Gehäuse 1 mittels des Drehantriebes 47 in die in der Figur 7c dargestellte Stellung gebracht, die gegenüber der in den Figuren 7a bzw. 7b dargestellten Stellungen um 90° betreffend die Rotationsachse 11 bzw. Drehachse 10 winkelversetzt ist. An der in Figur 7c dargestellten Position wird nun die Vertikalposition 23 der Rotationsebene des Laserstrahls 3 bestimmt. Das Gehäuse 1 wird um 180° in die in der Figur 7d dargestellte Stellung gedreht und erneut die Vertikalposition 23 ermittelt. Weichen die beiden Vertikalpositionen voneinander ab, wird die Laserstrahleinrichtung 2 mittels der Stellmotoren 6, 7 soweit verschwenkt, dass die Rotationsebene des Laserstrahls 3 in der Mitte der beiden gemessenen Vertikalpositionen 23 liegt.

Liegen die in den Figuren 7a bis 7d dargestellten Richtungen zwischen Gehäuse 1 und Messelement 20 nicht exakt in der X- bzw. Y-Richtung, können eventuelle mehrfache Iterationsschritte erforderlich sein, um die Rotationsebene des rotierenden Laserstrahls 3 in eine Horizontalebene zu bringen, in der in allen vier Winkelstellung der Laserstrahl 3 an derselben Vertikalposition 23 auf das Messfeld 22 des Messelementes 20 trifft.

Ist dies erreicht, setzt die Steuereinrichtung 9 die aktuellen Werte, die die Libellen 4, 5 liefern, als Nullwerte fest. Die Libellen 4, 5 sind jetzt kalibriert.

Vor der Durchführung der oben beschriebenen Messungen ermitteln in den Zeichnungen nicht dargestellte Umgebungsparametersensoren Luftfeuchtigkeit, Luftdruck, Temperatur etc., um vor jeder Messung solange zu warten, bis sich die Umgebungsparameter innerhalb des Gehäuses 1 stabilisiert haben bzw. Werte erreicht haben, die mit den entsprechenden Werten außerhalb des Gehäuses 1 übereinstimmen.

Mit der erfindungsgemäßen Vorrichtung lässt sich auch die Parallelität zweier insbesondere in einer Horizontalebene sich erstreckenden Maschinenteil 25, 26 und gegebenenfalls weiterer nicht dargestellter Maschinenteile ermitteln. Das diesbezügliche Verfahren wird in den Figuren 5a bis 6a grob schematisch dargestellt. Bei den Maschinenteilen 25, 26 kann es sich um Walzen handeln, die um eine horizontale Drehachse drehen können, wobei Ziel der Messung ist, den Versatz der Achsen zueinander zu ermitteln.

Zur Durchführung der Parallelitätsmessung wird das Gehäuse 1 in eine liegende Position gebracht, in der der axiale Laserstrahl 12 in einer Horizontalebene liegt. Die Bodenplatte 8 des Rotationssensors 1 kann hierzu in geeigneter Weise an einem Stativ befestigt werden, so dass die Rotationsachse 11 bzw. die Achse des Laserstrahls 12 etwa in einer Horizontalen liegt. Die Figuren 5a, 5b zeigen, dass der axiale Laserstrahl 12 sich in einer Y-Richtung erstrecken soll. Um den axialen Laserstrahl 12 in eine exakte Horizontallage zu bringen, muss die Laserstrahleinrichtung 2 gegenüber dem Gehäuse 1 um die X-Achse verschwenkt werden. Dies erfolgt mittels des Stellmotors 6.

Ein drittes Nivellierungsmittel 13, bei dem es sich um eine Libelle handeln kann, übermittelt der Steuereinrichtung 9 die aktuelle Abweichung der Lage der Achse der Laserstrahleinrichtung 2 von der Horizontalen. Das dritte Nivellierungsmittel 13 ist fest mit der Laserstrahleinrichtung 2 verbunden, erstreckt sich aber senkrecht zu den ersten und zweiten Nivellierungsmitteln 4, 5, die ebenfalls senkrecht zueinander stehen.

Ist der axiale Laserstrahl 12 nivelliert, liegt die Rotationsebene des rotierenden Laserstrahls 3 in einer Vertikalebene, deren Lage dann mittels zweier fest im Raum positionierter Messelemente 20 ermittelt wird. Die Messelemente 20 werden hierzu an einer geeigneten Stelle ortsfest gegenüber den Maschinenteilen 25, 26 positioniert, bspw. jeweils mit einem Stativ am Maschinenbett oder auf einem Fußboden positioniert. Die Messelemente 20 bilden somit ortsfeste Markierungselemente 27, 28, die eine Referenzlinie zwischen sich definieren.

Das dritte Nivellierungsmittel 13, also die diesbezügliche Libelle, liefert einen Wert, der nicht nur vom Neigungswinkel α abhängt, sondern auch von dem sogenannten Verrollwinkel β des Gehäuses 1 bzw. der Libelle 13 gegenüber der Rotationsachse 11 bzw. der Achse des axialen Laserstrahls 12. Der Verrollwinkel β wird ermittelt, um gespeichert zu werden oder um ihn durch eine Verdrehung des Gehäuses 1 um die Drehachse 10 auf null zu setzen.

Mit dem so ausgerichteten axialen Laserstrahl 12 wird an zumindest zwei Messstellen 29, 30 ein Abstand des axialen Laserstrahl 12 zum Maschinenteil 25, 26 bestimmt.

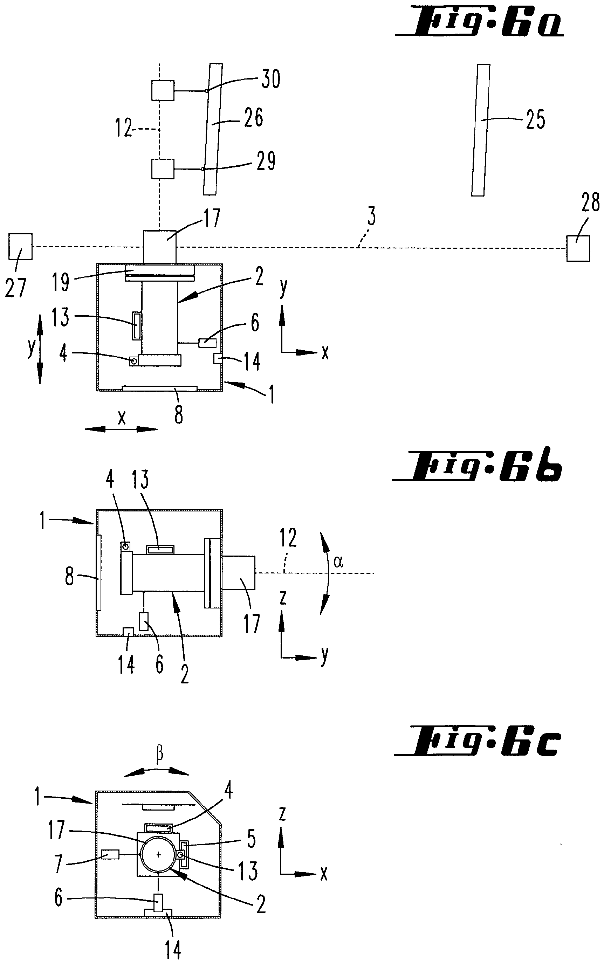

Die Figuren 6a bis 6c zeigen die Vermessung der Lage des zweiten Maschinenteiles 26. Hierzu wird das Gehäuse 1 zunächst in eine Position gebracht, in der der Laserstrahl 12 nahezu parallel zur Achse des zweiten Maschinenteils 26 verläuft. Sodann wird das Gehäuse 1 derart lagejustiert, dass der Laserstrahl 12 in der Horizontalebene verläuft und der rotierende Laserstrahl 3 an den Stellen das Messfeld 22 der als Markierungen verwendeten Messelemente 27, 28 trifft. Hierzu wird das bspw. verwendete Stativ an einem anderen Ort aufgestellt. Mit nicht dargestellten Einstellelementen, bspw. Verstellschrauben, wird die Lage des Gehäuses 1 solange verändert, bis der Laserstrahl 12 nivelliert ist und gleichzeitig der Laserstrahl 3 durch die zuvor ermittelten Positionen der Messelemente 20 geht, also in der Referenzlinie zwischen den Markierungselementen 27, 28 liegt.

Bei der Ausrichtung wird zusätzlich der Verrollwinkel β des Gehäuses 1 bzw. des dritten Nivellierungsmittels 13 bestimmt. Hierzu dient ein viertes Nivellierungsmittel 14, bei dem es sich ebenfalls um eine Libelle handeln kann. Es reicht hier aber aus, wenn ein mikro-elektromechanischer Neigungssensor verwendet wird. Der Verrollwinkel β wird auf den Verrollwinkel β eingestellt, der bei der Vermessung des ersten Maschinenteiles 25 ermittelt worden ist.

Nach dieser Ausrichtung verläuft der axiale Laserstrahl 12 in der in Figur 6 dargestellten Position exakt parallel zu der in der Figur 5 dargestellten Position. Werden jetzt an zwei verschiedenen Messstellen 29, 30 Abstandswerte des axialen Laserstrahls 12 zum zweiten Maschinenteil 26 ermittelt, so lassen sich aus den in der ersten Messung gewonnenen Abstandswerten Winkelabweichungen der Parallelität der beiden Maschinenteile 25, 26 voneinander berechnen.

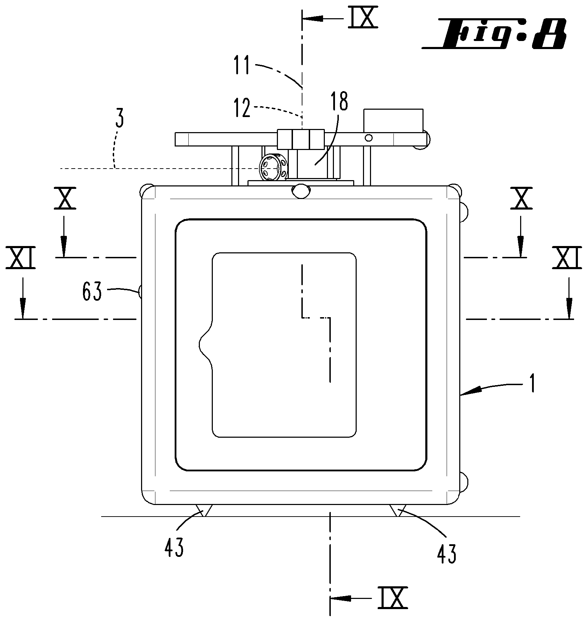

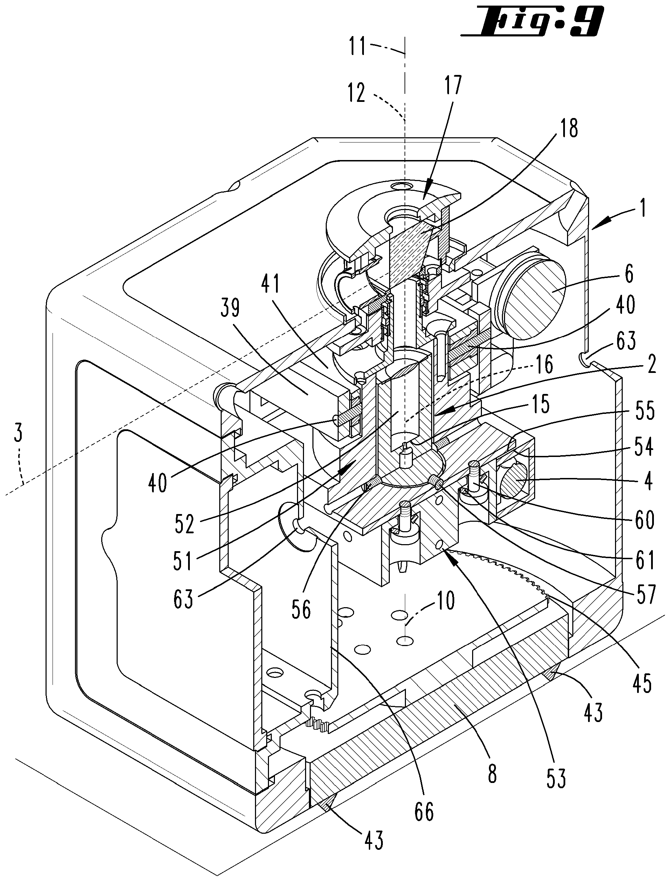

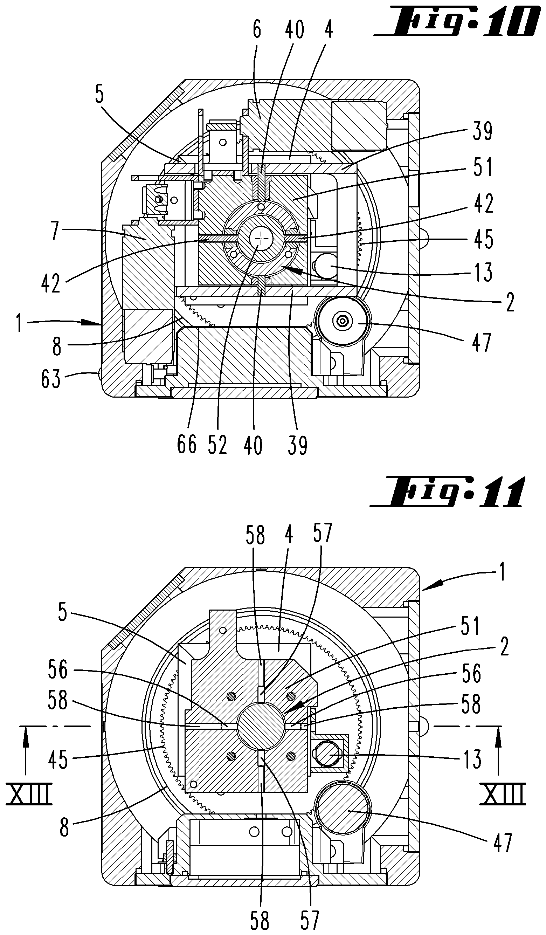

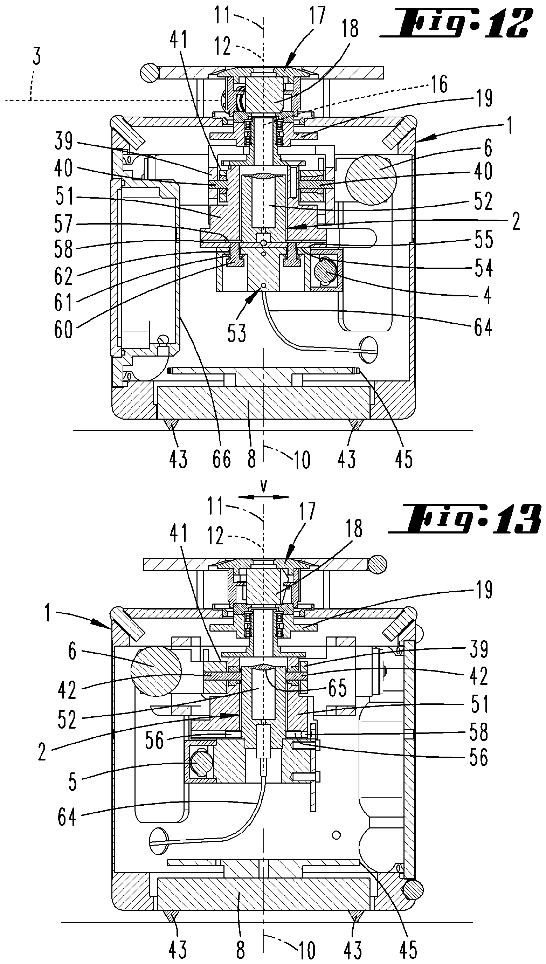

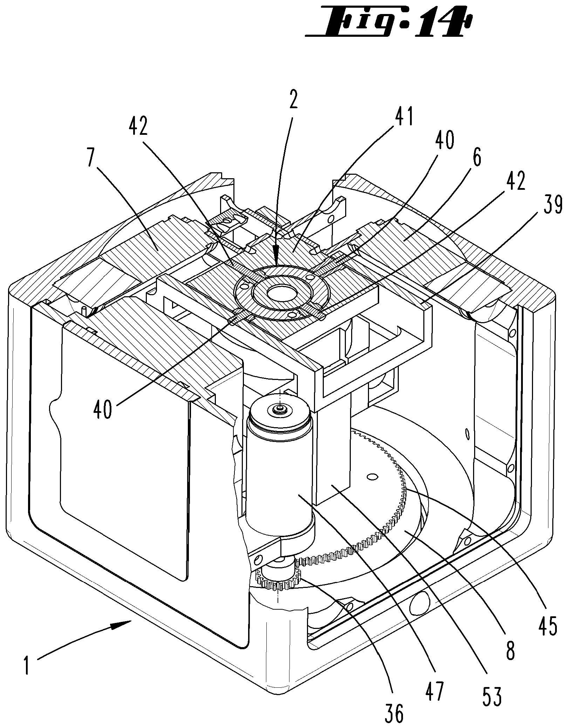

Die Figuren 8 bis 14 zeigen ein Ausführungsbeispiel eines Rotationslasers, das nachfolgend beschrieben wird: Der Rotationslaser besitzt ein im Wesentlichen quaderförmiges Gehäuse 1 mit einer Unterseite, die eine Bodenplatte 8 ausbildet, mit der das Gehäuse 1 auf einer Aufstellfläche aufstellbar ist. Hierzu ragen von der Unterseite der Bodenplatte 8 drei Füße 43 ab. Innerhalb des Gehäuses 1 befindet sich eine Leiterplatte mit einer elektronischen Schaltung, die eine Steuereinrichtung ausbildet. Innerhalb des Gehäuses 1 befindet sich darüber hinaus eine Lasereinrichtung 2. Die Lasereinrichtung 2 ist innerhalb des Gehäuses 1 kardanisch um einen Lagerpunkt aufgehängt. Hierzu ist eine Kardanaufhängung 39 fest mit dem Gehäuse 1 verbunden. Die Kardanaufhängung 39 besitzt zwei sich gegenüberliegende Befestigungsschenkel, von denen jeweils eine Gelenkachse 40 abragt. An der Gelenkachse 40 ist ein Kardanringkörper 41 befestigt, der um die Gelenkachse 40 in einer Horizontalrichtung verschwenkbar ist.

In einer Öffnung des Kardanringkörpers 41 befindet sich ein Pendelkörper 51, der Teil der Lasereinrichtung 2 ist. Der Pendelkörper 51 ist um eine weitere Gelenkachse 42, die quer zur Gelenkachse 40 verläuft, gegenüber dem Kardanringkörper 41 verschwenkbar.

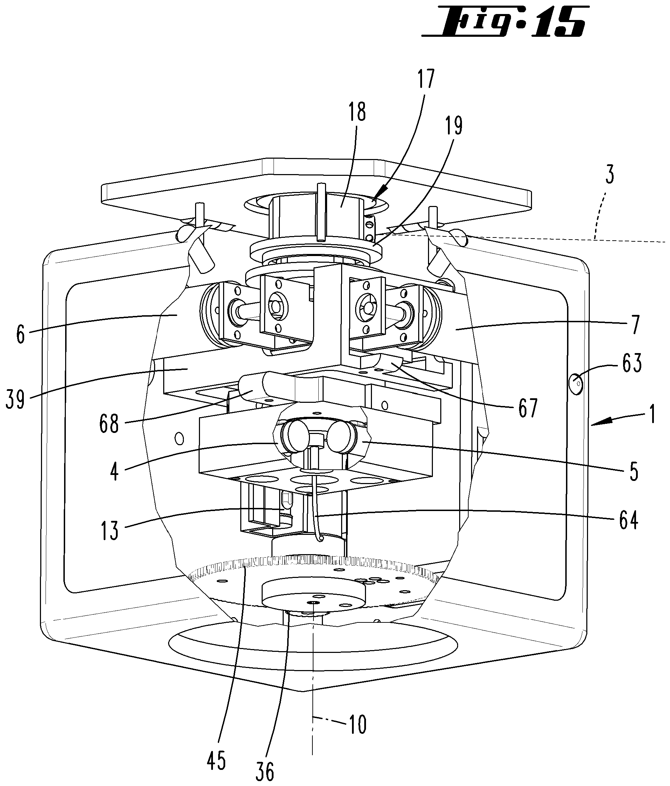

Die Neigungswinkel des Pendelkörpers 51 bzw. der Lasereinrichtung 2 lässt sich mittels zwei Stellmotoren 6, 7 verstellen. Im Ausführungsbeispiel sind die Verstellmotoren am Kardanringkörper 41 befestigt. Der Stellmotor 6 ist in der Lage, den Pendelkörper 51 gegenüber dem Kardanringkörper 41 um die Gelenkachse 42 zu verschwenken. Mit dem Stellmotor 7 lässt sich der Kardanringkörper 41 um die Gelenkachse 40 gegenüber der gehäusefesten Kardanaufhängung 39 verschwenken. Bei den Stellmotoren 6, 7 handelt es sich um Elektromotoren, die mit einem Untersetzungsgetriebe auf eine Schwenkachse wirken, auf der ein Band oder eine Zuglasche gewickelt ist, die mit einem Vorsprung 67, 68 entweder der Kardanaufhängung 39 oder des Pendelkörpers 51 verbunden ist. Das Band oder die Zuglasche ist in den Zeichnungen nicht dargestellt. Es kann an ein radial von der in der Figur 15 sichtbaren Achse des Stellmotors 6, 7 abragen. Das andere Ende des Bandes ist an den Vorsprung 67 der Kardanaufhängung 39 bzw. am Vorsprung 68 des Pendelkörpers 51 befestigt. Die Kardanaufhängung 39 ist mit geeigneten Befestigungsmitteln ortsfest am Gehäuse 1 befestigt.

Die Lasereinrichtung 2 trägt einen Kopf 17, der um eine Rotationsachse 11, die bevorzugt durch das Kreuz von Gelenkachse 42 und Gelenkachse 40 verläuft, drehbar ist. Hierzu dient ein Rotationsantrieb 19, der den Kopf 17 in eine gleichmäßige Rotationsbewegung um die Rotationsachse 11 bringen kann.

Der Kopf 17 trägt ein Pentaprisma 18 mit dem ein in etwa koaxial zur Rotationsachse 11 verlaufender Laserstrahl 16 um 90° in die Rotationsebene umgelenkt wird, so dass ein in einer Rotationsebene rotierender Laserstrahl 3 entsteht. Das Pentaprisma 18 bildet einen Strahlteiler. Der Laserstrahl 16 tritt teilweise auch als axialer Laserstrahl 12 aus dem Kopf 17 des Rotationslasers heraus. Der Pendelkörper 51 besitzt eine Höhlung, in der sich ein Fortsatz 59 eines Emissionsflächenträgers 53 befindet. Die Höhlung des Pendelkörpers 51 besitzt einen im Wesentlichen kreisrunden Querschnitt. Die Außenwandung des Fortsatzes 59 ist ebenfalls im Querschnitt kreisrund und besitzt einen radialen Abstand zur Innenwandung der Höhlung des Pendelkörpers 51.

Eine vom Kopf 17 weg weisende Stirnseite des Pendelkörpers 51 bildet eine Gegenanlagefläche 55. Die Gegenanlagefläche 55 verläuft in einer Ebene, zu der die Rotationsachse 11 senkrecht verläuft. Die Rotationsachse 11 verläuft etwa mittig durch die Höhlung des Pendelkörpers 51.

An der Gegenanlagefläche 55 stützt sich eine Anlagefläche 54 des Emissionsflächenträgers 53 ab, die von einem Flanschabschnitt des Emissionsflächenträgers 53 gebildet ist. In der Gegenanlagefläche 55 befinden sich mehrere, bevorzugt vier in gleichmäßiger Umfangsverteilung um die Rotationsachse 11 angeordnete Gewindesackbohrungen. In jede dieser Gewindesackbohrungen ist der Schaft einer Befestigungsschraube 60 eingedreht. Die Befestigungsschraube 60 durchgreift eine Schraubendurchtrittsöffnung 62 des Flanschabschnittes des Emissionsflächenträgers 53. Der Kopf der Schraube 60 besitzt einen bezogen auf die Erstreckungsrichtung der Schraube 60 axialen Abstand zu einer der Anlagefläche 54 gegenüberliegenden Abstützfläche, an der sich ein Federelement 61 mit einem seiner Enden abstützt. Das andere Ende des Federelementes 61 stützt sich am Schraubenkopf ab. Das Federelement, welches von einer Wendelgangdruckfeder gebildet sein kann, im Ausführungsbeispiel aber von einer Tellerfeder gebildet ist, ist vorgespannt und entfaltet eine Presskraft, mit der die Anlagefläche 54 gegen die Gegenanlagefläche 55 gepresst wird.

Die Kraft, mit der die beiden Flächen 54, 55 gegeneinander beaufschlagt werden, erzeugt eine Reibkraft, die überwunden werden muss, um den Emissionsflächenträger 53 quer zur Erstreckungsrichtung der Rotationsachse 11 gegenüber dem Pendelkörper 51 zu verschieben.

In der axialen Mitte weist der Emissionsflächenträger 53 den Strahldurchtrittskanal 52 auf, der mit einer Austrittslinse 65 versehen ist. Der Boden des Strahldurchtrittskanals 52 besitzt in seiner Mitte eine Öffnung 15, die einen Durchmesser von wenigen Mikrometern besitzt. Es handelt sich um eine Blende, durch die ein Laserstrahl 16 austreten kann, der in Richtung der Rotationsachse 11 in das Pentaprisma 18 eintritt und dort in den rotierenden Laserstrahl 3 und den stehenden axialen Laserstrahl 12 aufgeteilt wird.

Die Erzeugung des Laserstrahls erfolgt im Ausführungsbeispiel an einer Stelle, die entfernt vom Emissionsflächenträger 53 angeordnet ist durch einen fest mit dem Gehäuse verbundenen Laser. Der Laserstrahl wird über einen Lichtwellenleiter 64 zum Boden des Strahldurchtrittskanals 52 geleitet. Ein Endabschnitt des Lichtwellenleiters 64 steckt hierzu in einer axialen Einstecköffnung des Emissionsflächenträgers 53. Die Stirnfläche des Lichtwellenleiters 64 befindet sich unmittelbar unterhalb der Öffnung 15, so dass das aus der Stirnseite des Lichtwellenleiters 64 heraustretende Laserlicht durch die von der Öffnung 15 gebildete Blende austreten kann.

Indem der Emissionsflächenträger 53 in eine Richtung quer zur Rotationsachse 11 verschoben werden kann, lässt sich die Emissionsfläche 15 von einer Versatzstellung in Richtung des Doppelpfeils V in eine Koaxialstellung zur Rotationsachse 11 bringen. Hierzu sind Justierschrauben 56, 57 vorgesehen, die sich paarweise gegenüberliegen und jeweils um 90° versetzt bezogen auf die Rotationsachse 11 sind. Die Justierschrauben 56, 57 stecken in quer zur Rotationsachse 11 verlaufenden Gewindeöffnungen 58. Mit den Justierschrauben 56, 57 lässt sich die Position des Emissionsflächenträgers 53 in zwei senkrecht zueinander stehenden Richtungen derart gegenüber dem Pendelkörper 51 bzw. der Rotationsachse 11 verlagern, dass die Emissionsfläche 15, also die Austrittsöffnung für den Laserstrahl 16, in die Rotationsachse 11 gebracht werden kann.

Die Justage kann im vollständig montierten Zustand durchgeführt werden, da Leiterplatten, Gehäusewände und/ oder der Boden eines Batteriefachs 66 Schraubwerkzeugdurchtrittsöffnungen 63 ausbilden. Schraubwerkzeugdurchtrittsöffnungen 63 fluchten jeweils mit den ihnen zugeordneten Gewindeöffnungen 58, so dass Schraubwerkzeugdurchtrittskanäle ausgebildet sind, durch die die Klinge eines Schraubendrehers von der Gehäuseaußenseite her eingesteckt werden kann, um die Justierschrauben 56, 57 zu verstellen.

### Liste der Bezugszeichen

| | | | |
|---|---|---|---|
| 1 | Gehäuse | 29 | Messstelle |
| 2 | Laserstrahleinrichtung | 30 | Messstelle |
| 3 | Laserstrahl, rotierend | 31 | Prisma |
| 4 | Libelle | 32 | Prisma |
| 5 | Libelle | 33 | Magnet |
| 6 | Stellmotor | 34 | Spulenanordnung |
| 7 | Stellmotor | 35 | Leiterplatte |
| 8 | Befestigungsabschnitt | 36 | Zahnrad |
| 9 | Steuereinrichtung | 37 | Drehlager |
| 10 | Drehachse | 38 | Drehlager |
| 11 | Rotationsachse | 39 | Kardanaufhängung |
| 12 | Laserstrahl, axial (stehend) | 40 | Gelenkachse |
| 13 | Libelle | 41 | Kardanringkörper |
| 14 | Neigungssensor | 42 | Gelenkachse |
| 15 | Laseremissionsfläche | 43 | Aufstellpunkt |
| 16 | Laserstrahl | 44 | Innengwinde |
| 17 | Kopf | 45 | Verzahnung |
| 18 | Pentaprisma | 46 | Datenübertragungsstrecke |
| 19 | Rotationsantrieb | 47 | Drehantrieb |
| 20 | Messelement | 48 | Horizontalfläche |
| 21 | Fuß | 64 | Lichtwellenleiter |
| 22 | Messfeld | | |
| 23 | Vertikalposition | X | Achse |
| 24 | Gehäuse | Y | Achse |
| 25 | erstes Maschinenteil | Z | Achse |
| 26 | zweites Maschinenteil | α | Neigungswinkel |
| 27 | Markierungselement | β | Verrollwinkel |
| 28 | Markierungselement | ω | Winkel |

## Patentansprüche

1. Rotationslaser mit einem Gehäuse, mit einer im Gehäuse kardanisch aufgehängten Laserstrahleinrichtung (2), welche mit einem rotierenden, axial- und neigungsfest mit der Lasereinrichtung (2) verbundenen Kopf (17) einen um eine in einer Z-Achse verlaufende Rotationsachse (11) in einer Rotationsebene (X/Y-Ebene) rotierenden Laserstrahl (3) erzeugt, mit ersten und zweiten Nivellierungsmitteln (4, 5) zur Ermittlung einer Neigung der Rotationsebene (X/Y-Ebene) zu einer Horizontalebene bei auf eine Horizontalfläche aufgesetztem Gehäuse (1), mit einer Steuereinrichtung (9) zum Antrieb von Stellmotoren (6, 7) einer Justiereinrichtung zum Verstellen der Neigung der Laserstrahleinrichtung (2) gegenüber dem Gehäuse (1) um eine X-Achse und eine Y-Achse als Reaktion auf Steuereingaben und mit einem bezogen auf das Gehäuse (1) in Richtung der Rotationsachse (11) dem Kopf (17) gegenüberliegenden Befestigungsabschnitt (8), gegenüber dem Gehäuse (1) von der Steuereinrichtung (9) mittels eines Drehantriebes (47) um eine Drehachse (10), die sich zumindest annähernd richtungsgleich zur Rotationsachse (11) erstreckt, in vorbestimmte Winkelstellungen verdrehbar ist, **gekennzeichnet durch** dritte Nivellierungsmittel (13) zur Ermittlung eines Neigungswinkels (α) einer Neigung eines parallel zur Rotationsachse (11) gerichteten axialen Laserstrahls (12) gegenüber der Horizontalebene bei in eine liegende Position gebrachtem Gehäuse (1), bei der die Rotationsachse (11) bzw. die Achse des Laserstrahls (12) etwa in einer Horizontalen liegt, wobei der axiale Laserstrahl (12) mittels der Stellmotoren (6) in eine Horizontallage bringbar ist und mit vierten Nivellierungsmitteln (14) zur Ermittlung eines Verrollwinkels (β) des Gehäuses in Bezug auf die Drehachse (10) bei in eine Horizontallage gebrachter Rotationsachse (11).

2. Rotationslaser nach Anspruch 1, **dadurch gekennzeichnet, dass** der Kopf (17) ein um die Rotationsachse (11) rotierendes Pentaprisma (18) aufweist, mit dem der rotierende Laserstrahl (3) erzeugt wird.

3. Rotationslaser nach einem der Ansprüche 1 oder 2, **dadurch gekennzeichnet, dass** der Drehantrieb (47) mit einem Zahnrad (26) auf eine Verzahnung (45) des Befestigungsabschnittes (8) wirkt.

4. Rotationslaser nach einem der Ansprüche 1 bis 3, **dadurch gekennzeichnet, dass** zumindest eines der ersten bis vierten Nivellierungsmittel (4, 5, 13, 14) von Libellen gebildet ist, die an der Laserstrahleinrichtung (2) befestigt sind.

5. Rotationslaser nach einem der Ansprüche 1 bis 4, **gekennzeichnet durch** eine Datenübertragungsstrecke (46) zwischen einem Messelement (20) und der Steuereinrichtung (9) zur Übermittlung eines mit einem Messfeld (22) gemessenen Positionswertes des Treffpunktes (23) des Laserstrahls (3) auf dem Messfeld (22).

6. Verfahren zur Bestimmung der Parallelität zweier sich in einer Horizontalebene erstreckenden Maschinenteile (25, 26) mit einem Rotationslaser gemäß Anspruch 1 mit den folgenden Schritten:
- Anordnen des Gehäuses (1) des Rotationslasers in der Nähe eines ersten (25) der beiden Maschinenteile (25, 26);
- Ausrichten des axialen Laserstrahls (12) in eine annähernde Parallelrichtung zum ersten Maschinenteil (25);
- Nivellieren des axialen Laserstrahles (12) durch Justieren der Lage der Lasereinrichtung (2) gegenüber dem Gehäuse (1) mittels der dritten Nivellierungsmittel (13) und eines der Stellmotoren (6) der Justiereinrichtung;
- Erfassen einer in der Rotationsebene des rotierenden Laserstrahls (3) liegenden horizontalen Referenzlinie im Raum mittels raumfester Markierungselemente (27, 28);
- Erfassen des Verrollwinkels (β) des Gehäuses (1) bzw. der dritten Nivellierungsmittel (13) um die Drehachse (10) gegenüber der Horizontalebene mittels des vierten Nivellierungsmittels (14);
- Bestimmen an zumindest zwei Messstellen (28, 29) entlang des ersten Maschinenteiles (25) dessen Abstand zum axialen Laserstrahl (12);
- Verlagern des Gehäuses (1) des Rotationslasers in die Nähe des zweiten Maschinenteiles (26);
- Ausrichten der Rotationsebene des rotierenden Laserstrahls (3) in die Referenzlinie, wobei der axiale Laserstrahl (12) nivelliert und das Gehäuse (1) bzw. die dritten Nivellierungsmittel (13) mittels der vierten Nivellierungsmittel (14) und des Drehantriebes (47) in den erfassten Rollwinkel (β) gebracht wird;
- Bestimmen an zumindest zwei Messstellen (29, 30) entlang des zweiten Maschinenteiles (26) dessen Abstand zum axialen Laserstrahl (12).

7. Verfahren nach Anspruch 6, **dadurch gekennzeichnet, dass** mit einer Datenübertragungsstrecke (46) zwischen einem jeweils eine der Markierungselemente (27, 28) bildenden Messelement (20) und einer Steuereinrichtung (9) ein mit einem Messfeld (22) des Messelementes (20) gemessener Positionswert eines Treffpunktes (23) des Laserstrahls (3) auf dem Messfeld (22) übermittelt wird.

## Claims

1. Rotary laser comprising a housing, a laser beam device (2) which is gimbal mounted in the housing and which, by means of a rotating head (17) which is connected to the laser beam device (2) in an axially and inclination-fixed manner, generates a laser beam (3) which rotates about an axis of rotation (11) extending in a Z-axis in a plane of rotation (X/Y plane), first and second levelling means (4, 5) for determining an inclination of the plane of rotation (X/Y plane) with respect to a horizontal plane when the housing is placed on a horizontal surface (1), a control device (9) for driving servomotors (6, 7) of an adjusting device for adjusting the inclination of the laser beam device (2) relative to the housing (1) about an X-axis and a Y-axis in response to control inputs, and comprising a fastening portion (8) which, in relation to the housing (1), is opposite the head (17) in the direction of the axis of rotation (11), and relative to which the housing (1) can be rotated into predetermined angular positions by the control device (9) by means of a rotary drive (47) about an axis of rotation (10) which extends at least approximately in the same direction as the axis of rotation (11), **characterised by** third levelling means (13) for determining an angle of inclination (α) of an inclination of an axial laser beam (12) directed parallel to the axis of rotation (11) with respect to the horizontal plane when the housing (1) is brought into a lying position, in which the axis of rotation (11) or the axis of the laser beam (12) lies approximately in a horizontal, it being possible for the axial laser beam (12) to be brought into a horizontal position by means of the servomotors (6), and comprising fourth levelling means (14) for determining a roll angle (β) of the housing with respect to the axis of rotation (10) when the axis of rotation (11) is brought into a horizontal position.

2. Rotary laser according to claim 1, **characterised in that** the head (17) has a pentaprism (18) which rotates about the axis of rotation (11) and by means of which the rotating laser beam (3) is generated.

3. Rotary laser according to either claim 1 or claim 2, **characterised in that** the rotary drive (47) acts on a toothing (45) of the fastening portion (8) by means of a toothed wheel (26).

4. Rotary laser according to any of claims 1 to 3, **characterised in that** at least one of the first to fourth levelling means (4, 5, 13, 14) is formed by spirit level vials which are fastened to the laser beam device (2).

5. Rotary laser according to any of claims 1 to 4, **characterised by** a data transmission path (46) between a measuring element (20) and the control device (9) for transmitting a position value of the point of incidence (23) of the laser beam (3) on the measuring field (22) that is measured using a measuring field (22).

6. Method for determining the parallelism of two machine parts (25, 26) extending in a horizontal plane by means of a rotary laser according to claim 1, comprising the following steps:
- arranging the housing (1) of the rotary laser in the vicinity of a first (25) of the two machine parts (25, 26);
- aligning the axial laser beam (12) in an approximately parallel direction with respect to the first machine part (25);
- levelling the axial laser beam (12) by adjusting the position of the laser device (2) relative to the housing (1) by means of the third levelling means (13) and one of the servomotors (6) of the adjusting device;
- detecting a horizontal reference line lying in the plane of rotation of the rotary laser beam (3) in space by means of spatially fixed marking elements (27, 28);
- detecting the roll angle (β) of the housing (1) or the third levelling means (13) about the axis of rotation (10) relative to the horizontal plane by means of the fourth levelling means (14);
- determining, at at least two measuring points (28, 29) along the first machine part (25), the distance of the first machine part from the axial laser beam (12);
- moving the housing (1) of the rotary laser into the vicinity of the second machine part (26);
- aligning the plane of rotation of the rotary laser beam (3) in the reference line, wherein the axial laser beam (12) is levelled and the housing (1) or the third levelling means (13) is brought into the detected roll angle (β) by means of the fourth levelling means (14) and the rotary drive (47);
- determining, at at least two measuring points (29, 30) along the second machine part (26), the distance of the second machine part from the axial laser beam (12).

7. Method according to claim 6, **characterised in that** a position value of a point of incidence (23) of the laser beam (3) on the measuring field (22), which is measured using a measuring field (22) of the measuring element (20), is transmitted via a data transmission path (46) between a measuring element (20), which in each case forms one of the marking elements (27, 28), and a control device (9).

## Revendications

1. Laser rotatif avec un boîtier, avec un dispositif à faisceau laser (2) suspendu de façon cardanique dans le boîtier, lequel génère avec une tête rotative (17) reliée fixement au dispositif laser (2) du point de vue axial et de l'inclinaison, un faisceau laser (3) tournant dans un plan de rotation (plan X/Y) autour d'un axe de rotation (11) s'étendant selon un axe Z, avec des premiers et deuxièmes moyens de nivellement (4, 5) pour déterminer une inclinaison du plan de rotation (plan X/Y) par rapport à un plan horizontal lorsque le boîtier (1) est placé sur une surface horizontale, avec un dispositif de commande (9) pour commander des servomoteurs (6, 7) d'un dispositif de réglage pour régler l'inclinaison du dispositif à faisceau laser (2) par rapport au boîtier (1) autour d'un axe X et d'un axe Y en réaction à des entrées de commande et avec une partie de montage (8) située par rapport au boîtier (1) en face de la tête (17) dans la direction de l'axe de rotation (11) et pouvant être tournée par rapport au boîtier (1) dans des positions angulaires prédéterminées au moyen d'un entraînement en rotation (47) autour d'un axe de rotation (10) qui s'étend au moins approximativement dans la même direction que l'axe de rotation (11), **caractérisé par** des troisièmes moyens de nivellement (13) pour déterminer un angle d'inclinaison (α) d'une inclinaison d'un faisceau laser axial (12) dirigé parallèlement à l'axe de rotation (11), par rapport au plan horizontal lorsque le boîtier (1) a été amené dans une position couchée dans laquelle l'axe de rotation (11) ou l'axe du faisceau laser (12) se situe approximativement dans un plan horizontal, le faisceau laser axial (12) pouvant être amené dans une position horizontale au moyen des servomoteurs (6) et avec des quatrièmes moyens de nivellement (14) pour déterminer un angle de roulis (β) du boîtier par rapport à l'axe de rotation (10) lorsque l'axe de rotation (11) a été amené dans une position horizontale.

2. Laser rotatif selon la revendication 1, **caractérisé en ce que** la tête (17) comprend un pentaprisme (18) tournant autour de l'axe de rotation (11), avec lequel est généré le faisceau laser rotatif (3).

3. Laser rotatif selon l'une des revendications 1 ou 2, **caractérisé en ce que** l'entraînement rotatif (47) agit avec une roue dentée (26) sur une denture (45) de la partie de montage (8).

4. Laser rotatif selon l'une des revendications 1 à 3, **caractérisé en ce qu'**au moins l'un desdits premiers à quatrièmes moyens de nivellement (4, 5, 13, 14) est formé par des nivelles fixées audit dispositif à faisceau laser (2).

5. Laser rotatif selon l'une des revendications 1 à 4, **caractérisé par** une liaison de transmission de données (46) entre un élément de mesure (20) et le dispositif de commande (9) pour transmettre une valeur de position, mesurée avec un champ de mesure (22), du point d'impact (23) du faisceau laser (3) sur le champ de mesure (22).

6. Procédé pour déterminer le parallélisme de deux parties de machine (25, 26) s'étendant dans un plan horizontal avec un laser rotatif selon la revendication 1, comprenant les étapes suivantes :
- placer le boîtier (1) du laser rotatif à proximité d'une première (25) des deux parties de machine (25, 26) ;
- orienter le faisceau laser axial (12) dans une direction approximativement parallèle à la première partie de machine (25) ;
- niveler le faisceau laser axial (12) en réglant la position du dispositif laser (2) par rapport au boîtier (1) au moyen des troisième moyens de nivellement (13) et de l'un des servomoteurs (6) du dispositif de réglage ;
- détecter une ligne de référence horizontale située dans le plan de rotation du faisceau laser rotatif (3) dans l'espace au moyen d'éléments de marquage (27, 28) fixe dans l'espace ;
- détecter l'angle de roulis (β) du boîtier (1) ou des troisième moyens de nivellement (13) autour de l'axe de rotation (10) par rapport au plan horizontal au moyen des quatrième moyens de nivellement (14) ;
- déterminer en au moins deux points de mesure (28, 29) le long de la première partie de machine (25) la distance de celle-ci par rapport au faisceau laser axial (12) ;
- déplacer le boîtier (1) du laser rotatif à proximité de la deuxième partie de machine (26) ;
- aligner le plan de rotation du faisceau laser rotatif (3) dans la ligne de référence, le faisceau laser axial (12) étant nivelé et le boîtier (1) ou les troisième moyens de nivellement (13) étant amenés dans l'angle de roulis détecté (B) au moyen des quatrième moyens de nivellement (14) et de l'entraînement rotatif (47) ;
- déterminer en au moins deux points de mesure (29, 30) le long de la deuxième partie de machine (26) la distance de celle-ci par rapport au faisceau laser axial (12).

7. Procédé selon la revendication 6, **caractérisé en ce qu'**est transmise avec une liaison de transmission de données (46) entre un élément de mesure (20) formant à chaque fois un des éléments de marquage (27, 28) et un dispositif de commande (9) une valeur de position, mesurée avec un champ de mesure (22) de l'élément de mesure (20), d'un point d'impact (23) du rayon laser (3) sur le champ de mesure (22).
